# NEUE EUROPÄISCHE PATENTSCHRIFT

(11) **EP 0 674 672 B2**
(45) Veröffentlichungstag und Bekanntmachung des Hinweises auf die Entscheidung über den Einspruch: **26.11.2003**
(45) Hinweis auf die Patenterteilung: 16.07.1997
(21) Anmeldenummer: 94903771.7
(22) Anmeldetag: 14.12.1993
(51) Int. Cl.: C08F 283/01, C09D 151/08

(54) **WÄSSRIGE POLYMERDISPERSIONEN FÜR KLARLACKE**
AQUEOUS POLYMER DISPERSIONS FOR TRANSPARENT LACQUERS
DISPERSIONS AQUEUSES DE POLYMERES POUR LAQUES TRANSPARENTES

(30) Priorität: 16.12.1992 DE 4242518
(43) Veröffentlichungstag der Anmeldung: 04.10.1995
(73) Patentinhaber: BOLLIG & KEMPER KG, 50827 Köln (DE)
(72) Erfinder: HILLE, Hans, Dieter, D-51467 Bergisch Gladbach (DE); MÜLLER, Horst, D-51069 Köln (DE)
(74) Vertreter: Brandenburg, Thomas, Dr.
(86) Internationale Anmeldenummer: EP9303530
(87) Internationale Veröffentlichungsnummer: WO94013720

(56) Entgegenhaltungen:
- EP-A- 0 305 795
- EP-A- 0 391 271
- US-A- 4 100 127
- US-A- 4 259 224

## Beschreibung

Die Erfindung betrifft wäßrige Klarlacke basierend auf wässrigen Polymerdispersionen von Pfropfpolymeren auf Polyester- und Acrylat-Basis, Verfahren zu deren Herstellung, sowie deren Verwendung.

Die Reduzierung des Anteils an organischen Lösemitteln in Lacken wird allgemein angestrebt. Auf dem Gebiet der Lackiertechnik, insbesondere bei der Automobillackierung, aber auch in anderen Bereichen, besteht daher ein großes Interesse an wäßrigen Lacksystemen.

Bei der Serienlackierung von Automobilkarossen werden Mehrschichtlackierungen nach dem sogenannten "Basislack/Klarlack" -Verfahren bevorzugt. Dabei wird ein pigmentierter Basislack vorlackiert und nach kurzer Ablüftzeit, ohne Einbrennschritt mit Klarlack überlackiert. Anschließend werden Basislack und Klarlack zusammen eingebrannt. Dieses Verfahren führt zu optisch und technologisch sehr hochwertigen Lackierungen.

Bei Grundierungen und Basislacken gehören wäßrige Systeme seit langern zum Stand der Technik und sie werden in der Automobilindustrie bereits teilweise serienmäßig eingesetzt. Es ist daher allgemein wünschenswert, auch für die oberste Schicht, den Klarlack, ein geeignetes wäßriges System zu entwickeln und entsprechend zu verwenden.

Dazu muß ein solcher wäßriger Klarlack in seinem Eigenschattenprofil den konventionellen, in organischen Lösemitteln gelösten Klarlacken mindestens ebenbürtig sein. Der Festkörpergehalt bei Spritzviskosität muß so hoch sein, daß mit ein bis zwei Spritzgängen ausreichend hohe Schichtdicken erreicht werden. Dabei müssen die Lackfilme nach dem Einbrennen einen guten Verlauf und einen hohen Glanz haben. Der Film sollte außerdem klar und "füllig" sein, mit einem guten "Stand".

Wichtig ist auch die Reparaturfähigkeit. Auf einer bereits fertig eingebrannten Erstlackierung muß mit möglichst allen üblichen Basislacken ohne Schleifen eine Reparaturlackierung möglich sein, die gut haftet und gut steinschlagbeständig ist. Außerdem muß eine gute Beständigkeit gegenüber chemischen Angriffen gegeben sein, wie z.B. gegen Kraftstoffe, Säuren (Schwefelsäure) oder Laugen. Sehr wichtig ist des weiteren die Schwitzwasserbeständigkeit.

Die DE-OS 31 28 062 beschreibt wässrige Dispersionen von Copolymerisaten, die aus Styrol, (Meth-)Acrylsäureestern, Vinylestern, Hydroxygruppen-haltigen Monomeren, (Meth-)Acrylsäure, gegebenenfalls Acryl- und/oder Methacrylamid und Addittionsverbindungen von Glycidylestern von verzweigten Monocarbonsäuren durch Polymerisation mit ungesättigten Carbonsäuren in Gegenwart eines anionischen Emulgators herstellbar sind. In Kombination mit Aminoplastharzen ergeben sich daraus wärmehärtbare Überzüge. Diese Emulsionspolymerisate, sollten gemäß den dort angegebenen Anwendungsbeispielen 3 und 4 in Kombination mit konventionellen Metallic-Basislacken zur Herstellung von wetterbeständigen Zweischichtlackierungen geeignet sein. Die Reparaturfähigkeit und die Schwitzwasserbeständigkeit über 240 h bei 40 °C Konstantklima (DIN 50017) sind jedoch in Kombination mit wäßrigen Basislacken nicht gegeben.

Die EP-A-365 775, DE-OS 38 34 738, DE-OS-40 09 931 und DE-OS-40 09 932 beschreiben Lösungspolymerisate, die dadurch hergestellt werden, daß carboxylgruppenfreie und carboxylgruppenhaltige Monomere nacheinander oder in Teilmengen alternierend in einem organischen Lösungsmittel radikalisch polymerisiert werden. Die Beständigkeit der daraus hergestellten Klarlackfilme, insbesondere gegen Schwefelsäure und Natronlauge ist bei weitem nicht ausreichend.

In der EP-A-0 391 271 werden wäßrige Überzugsmittel beschrieben, die als Hauptkomponente ein Polyesteroligomer-Polyacrylat enthalten, das durch radikalische Polymerisation von ethylenisch ungesättigten Monomeren in einem hydroxyfunktionellen, radikalisch nicht polymerisierbaren Polyesteroligomeren hergestellt wird. Die Beständigkeit der daraus hergestellten Klarlackfilme gegenüber Schwefelsäure ist sehr schlecht.

Die DE-OS 40 27 594 beschreibt wäßrige Klarlacke, die als Bindemittel Emulsionspolymerisate enthalten, die unter Mitverwendung von speziellen fluorierten, ethylenisch ungesättigten Monomeren hergestellt werden.

Die DE-OS 40 10 176 beschreibt wäßrige Basislacke, die Bindemitteldispersionen enthalten, die dadurch hergestellt werden, daß in einem organischen Lösemittel ethylenisch ungesättigte Monomere in Gegenwart eines Polyurethanharzes, das polymerisierbare Doppelbindungen enthält, radikalisch polymerisiert werden und das so erhaltene Reaktionsprodukt in eine wäßrige Dispersion überführt wird. Eine Verwendung dieser Bindemitteldispersionen zur Herstellung von wäßrigen Klarlacken erwähnt die DE-OS 40 10 176 nicht.

Die US-A-4 100 127 offenbart eine Pfropfpolymerisatdispersion, die erhältlich ist durch Propfen eines oberflächenaktiven Polyesters mit einem wasserunlöslichen Monomeren. Die in dieser Offenbarung beschriebenen Polymere werden als physikalisch trockene Filme verwendet.

Die EP-A-0 305 795 beschreibt Pfropfcopolymerisatemulsionen, die als Bindemittel für lufttrocknende, wasserverdünnbare Anstrichmittel eingesetzt werden.

Weder die US-A-4 100 127 noch die EP-A-0 305 795 beschreiben den Einsatz der Polymere in Kombination mit Vernetzern.

Eine Aufgabe der vorliegenden Erfindung war es daher, einen wäßrigen Klarlack zur Verfügung zu stellen, der die oben genannten Anforderungen erfüllt.

Diese Aufgabe wird erfindungsgemäß gelöst durch einen wäßrigen Klarlack umfassend
- eine Polymerdispersion auf Polyester- und Acrylatbasis, die einen Festkörperanteil zwischen 30 und 55 Gew.-% aufweist und erhältlich ist durch radikalische Polymerisation von 80 bis 20 Gew.-% mindestens
   a) eines (Meth-)Acrylsäureesters von Mono- oder Polyalkoholen, wobei die Ester auch noch freie Hydroxylgruppen enthalten können und
   b) einer ethylienisch ungesättigten, mindestens monofunktionellen Säure und gegebenenfalls
   c) eines ethylenisch ungesättigten, von a) und b) verschiedenen Monomeren oder Gemischen davon, mit 20 bis 80 Gew.-% eines radikalisch polymerisierbaren Polyesterharzes mit 0,2 bis 1,5 polymerisierbaren Doppelbindungen pro Molekül und einem Molekulargewicht von 300 bis 5000, erhältlich durch Polykondensation von
      - mindestens zweiwertigen Polyalkoholen ausgewählt aus einer Gruppe von Ethylenglykol, 1,3- und 1,2-Propylenglykol, 1,4-Buandiol, 1,5-Pentandiol, 1,6-Hexandiol, 2,2-Dimethyl-propandiol, Diethylenglykol, Triethylenglykol, Tetraethylenglykol, Hexaehtylenglykol, 1,3-Dimethylolcyclohexan oder 1,4-Dimethylolcyclohexan, Glycerin, Trimethylolpropan oder Pentaerythrit;
      - mit mindestens zweiwertigen Polycarbonsäuren oder ihren Derivaten, ausgewählt aus der Gruppe von Bernsteinsäure, Glutarsäure, Adipinsäure, Acelainsäure, Sebacinsäure, Phthalsäure, Isophthalsäure, Terephthalsäure, Tetrahydrophthalsäure, Hexahydrophthalsäure, Endomethylentetrahydrophthalsäure, 1,2-, 1,3- oder 1,4-Cyclohexandicarbonsäure, Muconsäure und Kamphersäure, Trimellithsäure, Tricarballylsäure, Dimethylolpropionsäure oder deren mögliche Anhydride;
      - in Gegenwart von mindestens eine polymerisierbare Doppelbindung enthaltende Polyalkoholen, ausgewählt aus der Gruppe von Glycerinmonoallylether, Trimehylolpropanmonoallylether, 1,4-Butendiol oder Dimethylolpropionsäuremonoallyl-ether, oder einem ein Anlagerungsprodukt aus Allylglycidylether oder Glycidylmethacrylat an einen Carboxylgruppen enthaltenden Polyester;
wobei die Mengen a), b), c) und des Polyesterharzes so eingesetzt werden, daß das erhaltene Polymer eine Hydroxylzahl (OH-Zahl) von 30 bis 200 und eine Säurezahl von 5 bis 100 aufweist und
- einen Vernetzer, der ausgewählt ist aus wasserlöslichen und/oder wasserdispergierbaren Aminoharzen oder wasseremulgierbaren Polyisocyanaten sowie
- übliche Lackzusatzstoffe,
wobei das Verhältnis von Dispersionsfeststoffanteil zu Vernetzer zwischen 60:40 und 85:15 beträgt.

Als (Meth-)Acrylsäureester (a) von Mono- oder Polyalkoholen, wobei die Ester auch noch freie Hydroxylgruppen enthalten können, werden die Ester von Methanol, Ethanol, Propanol, iso-Propanol, Butyl-, tert. -Butyl-, iso-Butyl-, Allyl-, Cyclohexyl-, Ethylhexyl-, Lauryl- oder Stearylalkohol and als Ester von Polyalkoholen die Mono- oder Diester von Ethandiol, 1,2- oder 1,3-Propandiol, 1,4-Butandiol oder 1,6- Hexandiol eingesetzt.

Als ethylenisch ungesättigte, mindestens monofunktionelle Säure (b) können Acrylsäure, Methacrylsäure, Vinylsulfonsäure, Crotonsäure, Maleinsäure, Fumarsäure, Itaconsäure oder die Halbester von Maleinsäure, Fumarsäure oder Itaconsäure eingesetzt werden.

Als ethylenisch ungesättigtes, von (a) and (b) verschiedenes Monomer (c), das gegebenenfalls im Monomerengemisch enthalten sein kann, können Styrol, α-Methylstyrol, Vinyltoluol, Acrylamid, Methacrylamid, Acryinitril oder Methacrylnitril eingesetzt werden.

Die Herstellung von Polyesterharzen erfolgt nach üblichen, dem Fachmann geläufigen Verfahren durch. Veresterung von Dicarbonsäuren oder ihren geeigneten Derivaten, z.B. deren denkbaren Anhydriden, mit Diolen. Die Veresterung erfolgt beispielsweise in Gegenwart von üblichen Veresterungskatalysatoren bei erhöhten Temperaturen von z. B. 180 bis 230 °C in der Schmelze.

Um polymerisierbare Doppelbindungen in die Polyestermoleküle einzuführen, werden polymerisierbare Doppelbindungen enthaltende Polyalkohole mitverwendet.

Beispiele für Polyalkohole, die mindestens eine polymerisierbare Doppelbindung enthalten, sind Glycerinmonoallyether, Trimethylolpropanmonoallyether, 1,4-Butendiol, oder Dimethylolpropionsäuremonoallylether.

Es ist auch möglich, einen Carboxylgruppen enthaltenden Polyester herzustellen and dann an diese Carboxylgruppen ein Oxirangruppen tragendes Monomeres anzulagern, wie beispielsweise Allylglycidylether oder Glycidylmethacrylat.

Vorzugsweie enthält das Polyesterharz 0,5 bis 1,0 polymerisierbare Doppelbindungen pro Molekül. Ein Molekulargewicht von 500 bis 2000 für das Polyesterharz ist ebenfalls bevorzugt.

Die wäßrige Polymerdispersion weist vorzugsweise eine Hydroxylzahl von 50 bis 150 auf. Säurezahlen von 15 bis 40, sind für die wäßrige Dispersion bevorzugt.

Als Vernetzer ist jeder übliche Aminoharz-Vernetzer geeignet, wie er auf dem Lacksektor eingesetzt wird, sofern er wasserlöslich ist oder durch Zusatz organischer Lösemittel wasserverträglich gemacht werden kann. Die wasserlöslichen oder nach Zusatz von organischen Lösemitteln in Wasser löslichen Aminoharze werden nach bekannten Verfahren durch Umsetzung von Aldehyden, insbesondere Formaldehyd, mit mehreren Amino- oder Iminogruppen tragenden Verbindungen, wie z.B. Melamin, Harnstoff, Dicyandiamid und Benzoguanidin oder Gemischen derartiger Produkte hergestellt. Vorzugsweise werden Melamin-Formaldehyd-Harze eingesetzt.

Die wäßrigen Klarlacke können anstelle der Aminoharze auch mit wasseremulgierbaren Polyisocyanaten als Vernetzer versetzt werden und als Zweikomponenten-Klarlacke verarbeitet und bei Raumtemperatur ausgehärtet werden. Es können auch wasserverträgliche verkappte (blockierte) Polyisocyanate als Vernetzer eingesetzt werden.

Eine weitere Aufgabe der Erfindung war es, ein Verfahren zur Herstellung der erfindungsgemäßen wäßrigen Klarlacke zur Verfügung zu stellen. Die Lösung dieser Aufgabe wird durch den Gegenstand der Patentansprüche 10 bis 16 repräsentiert.

Als organische Lösemittel werden vorzugsweise solche eingesetzt, die ganz oder teilweise mit Wasser mischbar sind. In Frage hierfür kommen insbesondere Ethanol, Propanol, Butanol, Aceton, Methylethylketon, Methylisobutylketon, Butylglykol, Ethylenglykol, Propylenglykol, N-Methylpyrrolidon, Ethylenglykoldimethylether, Methoxybutanol oder Diacetonalkohol.

Als Radikalinitiator kommen Verbindungen in Frage wie beispielsweise Di-tert.-bulylperoxid, Di-cumylperoxid, Di-benzoylperoxid, Di-lauroylperoxid, Cumolhydroperoxid, tert.-Butylhydroperoxid, tert.-Butylperbenzoat, tert.-Butylperpivalat, tert.-Butyl-per-3,5,5-trimethylhexanoat, tert.-Butyl-per-2-ethylhexanoat, Di-2-ethylhexyl-peroxydicarbonat, Dicyclohexyl-peroxydicarbonat, 1,1-bis-(tert.-butylperoxy)-3,5,5-trimethylcyclohexan, 1,1,-bis-(tert.-butylperoxy)cyclohexan, Cyclohexanonperoxid, Methylisobutylketonperoxid, 2,2'-Azo-bis-(2,4-dimethylvaleronitril), 2,2'-Azo-bis-(2-methylbutyronitril), 1,1'-Azo-bis-cyclohexancarbonitril oder Azo-bis-isobutyronitril.

Die radikalische Polymerisation selbst wird bei Temperaturen zwischen 80 und 160 °C durchgeführt.

Die Menge an Hydroxylgruppen tragenden Monomeren (a), (b) und gegebenenfalls (c) sollte so gewählt werden, daß das Gesamtsystem der wäßrigen Dispersion eine Hydroxylzahl bezogen auf Feststoff von 30 bis 200, vorzugsweise 50 bis 150 und besonders bevorzugt von 80 bis 120 aufweist.

Für die Stabilität der wäßrigen Polymerdispersion ist es wichtig, daß die erfindungsgemäß hergestellten Polymere eine ausreichende Menge an zur Anionenbildung befähigten Gruppen enthalten, vorzugsweise Carboxylgruppen. Diese können sowohl über die Polyesterkomponente als auch über die (Meth-)Acrylsäurekomponente (a) eingebracht werden, sie können aber auch über beide Stufen eingeführt werden. Bevorzugt ist jedoch die Einführung über die (Meth-)Acrylsäureester-Komponente (a). Die Säurezahl der erfindungsgemäß hergestellten Polymere kann zwischen 5 und 100, vorzugsweise zwischen 15 und 40 betragen.

Bei der Verwendung von mehrfach ungesättigten Monomeren (a), (b) oder gegebenenfalls (c) besteht die Gefahr der Gelierung. Es ist deshalb notwendig, die Reaktionsbedingungen auf die Art und Menge solcher Monomeren abzustimmen. Gegebenenfalls kann es sinnvoll sein, sogenannte Regler mitzuverwenden. Derartige Regler sind in der EP-A-158 161 beschrieben. Dabei handelt es sich um Verbindungen wie z.B. Dodecylmercaptan oder Mercaptoethanol.

Nach der Polymerisation erfolgt die Überführung in die wäßrige Dispersion. Dazu müssen die zur Anionenbildung befähigten Gruppen vorher zumindest teilweise neutralisiert werden. Die Neutralisation erfolgt hierbei auf einen pH-Wert von 7 bis 10, vorzugsweise von 7,3 bis 8,5.

Zur Neutralisation können Basen wie Ammoniak oder flüchtige primäre, sekundäre und/oder tertiäre organische Amine, insbesondere Ethylamin, Dimethylamin, Triethylamin, Morpholin, Piperidin, Diethanolamin, Triethanolamin, Dimethylethanolamin oder Gemische davon eingesetzt werden. Besonders bevorzugt ist jedoch Dimethylethanolamin. Es ist vorteilhaft, das Neutralisationsmittel als verdünnte wäßrige Lösung zuzugeben.

Nach der Dispergierung in Wasser kann das organische Lösemittel ganz oder teilweise, gegebenenfalls unter vermindertem Druck, abdestilliert werden.

Der Festkörpergehalt der Dispersionen lieg dabei zwischen 30 und 55 Gew.-%, vorzugsweise zwischen 35 und 50 Gew.-%.
Die so erhaltenen Polymerdispersionen können zur Herstellung von wäßrigen Lacken, insbesondere wäßrigen Klarlacken für serienmäßige Zweischicht-Lackierungen, insbesondere für Automobilkarosserien, verwendet werden.

Die erfindungsgemäßen wäßrigen Klarlacke können außer den Polymerdispersionen noch weitere wasserverträgliche Bindemittel enthalten, wie Polyester, Polyether, Polyurethane, Polyacrylate und Aminoplastharze.

Die erfindungsgemäßen Klarlacke können neben geringen Mengen organischer Lösungsmittel auch übliche Zusatzstoffe enthalten. Der Anteil an organischem Lösungsmittel beträgt dabei zwischen 5 und 20 Gew.-%, vorzugsweise unter 15 Gew.-%. Besonders bevorzugte Lösungsmittel sind 1,2-Propandiol und Butyldiglykol.

Als übliche Zusatzstoffe kommen beispielsweise Verlaufsmittel, Entfüllungsmittel, Dispergierhilfen, Lichtschutzmittel, Anti-Absetz-Mittel oder Rheologiehilfsmittel in Frage.

Die erfindungsgemäßen Klarlacke können durch übliche Applikationstechniken aufgebracht werden. Die bevorzugte Auftragstechnik ist Spritzen, vorzugsweise elektrostalisch mit Hochrotationsglocken. Die Klarlacke können aber auch durch Streichen, Rakeln oder Tauchen aufgebracht werden.

Die erfindungsgemäßen Klarlacke können in üblichen Schichtstärken aufgetragen werden.

Die erfindungsgemäßen wäßrigen Klarlacke sind insbesondere geeignet für die Verwendung als Decklack bei Mehrschichtlackierungen in der Automobilindustrie. Sie zeichnen sich gegenüber den konventionellen, organische Lösungsmittel enthaltenden Systemen besonders durch den geringen Gehalt an Lösemitteln bei gleichzeitig hohem Festkörpergehalt und niedriger Viskosität aus. Bedingt durch den niedrigen Gehalt an organischen Lösemitteln zeichnen sich die wäßrigen Klarlacke ferner durch eine besondere Umweltfreundlichkeit aus.

Die wäßrigen Klarlacke können "naß-in-naß" auf einen wäßrigen oder nicht wäßrigen Basislack aufgebracht werden. Die naß-in-naß-Applikation schließt eine Antrocknung des Basislacks vor der Applikation des Klarlacks nicht aus; gemeinsam wird die Härtung bzw. der Einbrennvorgang (z.B. bei 130 bis 160 °C für 15 bis 30 min) durchgeführt.

Die Lackfilme, die aus den erfindungsgemäßen wäßrigen Klarlacksystemen hergestellt werden, zeichnen sich durch ein gleich hohes Eigenschaftsniveau wie die bekannten lösemittelhaltigen Systeme aus. Eigenschaften, wie z. B. Oberflächenhärte, Klarheit, Glanz, Fülle, Verlauf, Kratzfestigkeit, Elastizität, Beständigkeit gegen Lösemittel, gegen Pflegemittel, gegen bestimmte Chemikalien, wie z.B. Schwefelsäure, Natronlauge, Bremsflüssigkeit, Diesel- und Ottokraftstoff, Kurz- und Langzeitbewitterungsbeständigkeit sind mindestens so gut, in der Regel jedoch besser, wie bei bekannten lösemittethaltigen Systemen oder anderen im Stand der Technik bekannten wäßrigen Systemen.

Sowohl die wäßrigen Polymerdispersionen als auch die daraus hergestellten wäßrigen Klarlacke weisen eine gute Lagerstabilität auf.

Die nachfolgenden Beispiele dienen zur Erläuterung der Erfindung.

### Beispiele:

### Polyester A

In einem 2 I Reaktionsgefäß mit Rührer und Füllkörperkolonne werden 92 Teile 1,6-Hexandiol, 73 Teile Trimethylolpropanmonoallylether, 250 Teile Neopentylglykol, 80 Teile Trimethylolpropan, 554 Teile Cyclohexan-1,2-dicarbonsäureanhydrid und 2 Teile Dibutylzinnoxid aufgeschmolzen und unter Rühren so erhitzt, daß die Kolonnenkopftemperatur 100°C nicht überschreitet. Die Temperatur des Reaktionsgemisches sollte dabei nicht mehr als 230°C erreichen. Es wird sp lange verestert, bis eine Säurezahl von <4 erreicht ist. Nach Abkühlen auf <80°C wird mit 328 Teilen Methylethylketon auf einen Festkörpergehalt von 75 % verdünnt.
Man erhält einen Polyester mit einem berechneten mittleren Molekulargewicht von 1680 und einer Hydroxylzahl von 100 (bezogen auf Festharz).

### Polyester B

Es werden 92 Teile 1,6-Hexandiol, 55 Teile Glycerinmonoallylether, 250 Teile Neopentylglykol, 80 Teile Trimethylolpropan, 554 Teile Cyclohexan-1,2-dicarbonsäureanhydrid und 2 Teile Dibutylzinnoxid verwendet.
Die Herstellung des Polyesters wird wie bei Polyester A beschrieben durchgeführt.
Der Festkörpergehalt wird nach der Veresterung auf 75 % mit Methylethylketon eingestellt.
Man erhält einen Polyester mit einem berechneten mittleren Molekulargewicht von 1570 und einer Hydroxylzahl von 107 (bezogen auf Festharz).

### Polyester C

Es werden 92 Teile 1,6-Hexandiol, 48 Teile Allylglycidether, 250 Teile Neopentylglykol, 80 Teile Trimethylolpropan, 554 Teile Cyclohexan-1,2-dicarbonsäureanhydrid und 2 Teile Dibutylzinnoxid verwendet.
Die Herstellung des Polyesters wird wie bei Polyester A beschrieben durchgeführt.
Der Festkörpergehalt wird nach der Veresterung auf 75 % mit Methylethylketon eingestellt.
Man erhält einen Polyester mit einem berechneten mittleren Molekulargewicht von 1570 und einer Hydroxylzahl von 107 (bezogen auf Festharz).

### Polyester D

Es werden 92 Teile 1,6-Hexandiol, 209 Teile Trimethylolpropanmonoallylether, 169 Teile Neopentylglykol, 80 Teile Trimethylolpropan, 554 Teile Cyclohexan-1,2-dicarbonsäureanhydrid und 2 Teile Dibutylzinnoxid verwendet.
Die Herstellung des Polyesters wird wie bei Polyester A beschrieben durchgeführt.
Der Festkörpergehalt wird nach der Veresterung auf 75 % mit Methylethylketon eingestellt.
Man erhält einen Polyester mit einem berechneten mittleren Molekulargewicht von 1680 und eine Hydroxylzahl von 100 (bezogen auf Festharz).

### Polyester E

Es werden 92 Teile 1,6-Hexandiol, 37 Teile Butendiol-2, 250 Teile Neopentylglykol, 80 Teile Trimethylolpropan, 554 Teile Cyclohexan-1,2-dicarbonsäureanhydrid und 2 Teile Dibutylzinnoxid verwendet.
Die Herstellung des Polyesters wird wie bei Polyester A beschrieben durchgeführt.
Der Festkörpergehalt wird nach der Veresterung auf 75 % mit Methylethylketon eingestellt.
Man erhält einen Polyester mit einem berechneten mittleren Molekulargewicht von 1530 und einer Hydroxylzahl von 110 (bezogen auf Festharz).

### Beispiel 1

In einem 4 I Reaktionsgefäß mit Rührer, Thermometer, Rückflußkühler und 2 Zulaufgefäßen werden 532 Teile des Polyesterharzes A zusammen mit 76 Teilen Methylethylketon eingewogen.
In dem einen der beiden Zulaufgefäße wird eine Monomerenmischung, bestehend aus 103 Teilen Butylmethacrylat, 20 Teilen Mono-Styrol, 48 Teilen 2-Hydroxyproylacrylat, 53 Teilen 2-Hydroxypropylmethacrylat und 17 Teilen Acrylsäure eingewogen. In dem anderen Zulaufgefäß wird die Initiatorlösung bereitet, bestehend aus 10 Teilen 2,2'-Azo-bis-isobutyronitril (AIBN) und 69 Teilen Methylethylketon. Nachdem der Reaktionsgefäßinhalt auf 80°C aufgeheizt wurde, wird die Monomerenmischung innerhalb von 3 Stunden, die Polymerisationsinitiatorlösung innerhalb 3,5 Stunden simultan zugegeben. Die Polymerisationstemperatur wird bei 80°C gehalten. Nach Beendigung der Zuläufe wird noch 1,5 Stunden bei 80°C gerührt. Danach werden 13 Teile Dimethylethanolamin (entspricht einem Neutralisationsgrad von 60 %) und 1000 Teile vollentsalztes Wasser zugegeben.
Bei max. 55°C wird das Methylethylketon unter vermindertem Druck abdestilliert.
Man erhält eine Dispersion mit einem Festkörpergehalt von 43 % und einem pH-Wert von 7,70.
Das Polymere hat eine Säurezahl von 18 und einen Hydroxylzahl von 111.

### Beispiel 2

In einem 4 I Reaktionsgefäß mit Rührer, Rückflußkühler und 2 Zulaufgefäßen werden 532 Teile Polyester B zusammen mit 76 Teilen Methylethylketon eingewogen.
Ansonsten wird verfahren wie in Beispiel 1.
Nach Entfernung des Methylethylketon erhält man eine Dispersion mit einem Festkörpergehalt von 40 % und einem pH-Wert von 7,50.

### Beispiel 3

In einem 4 I Reaktionsgefäß mit Rührer, Rückflußkühler und 2 Zulaufgefäßen werden 532 Teile Polyester C zusammen mit 76 Teilen Methylethylketon eingewogen.
Ansonsten wird verfahren wie in Beispiel 1.
Nach Entfernung des Methylethylketon erhält man eine Dispersion mit einem Festkörpergehalt von 38 % und einem pH-Wert von 7,65.

### Beispiel 4

In einem 4 I Reaktionsgefäß mit Rührer, Rückflußkühler und 2 Zulaufgefäßen werden 532 Teile Polyester D zusammen mit 76 Teilen Methylethylketon eingewogen.
Zu der Monomerenmischung werden zusätzlich 14 Teile Mercaptoethanol zugegeben
Ansonsten wird verfahren wie in Beispiel 1.
Nach Entfernung des Methylethylketon erhält man eine Dispersion mit einem Festkörpergehalt von 39 % und einem pH-Wert von 7,70.

### Beispiel 5

In einem 4 I Reaktionsgefäß mit Rührer, Rückflußkühler und 2 Zulaufgefäßen werden 532 Teile Polyester F zusammen mit 76 Teilen Methylethylketon eingewogen.
Ansonsten wird verfahren wie in Beispiel 1.
Nach Entfernung des Methylethylketon erhält man eine Dispersion mit einem Festkörpergehalt von 42 % und einem pH-Wert von 7,40.

### Beispiel 6

In einem 4 I Reaktionsgefäß mit Rührer, Rückflußkühler und 2 Zulaufgefäßen werden 532 Teile Polyester A zusammen mit 76 Teilen Methylethylketon eingewogen.
Die Monomerenmischung besteht aus 84 Teilen Butylmethacrylat, 84 Teilen t-Butylacrylat, 20 Teilen Mono-Styrol, 38 Teilen 2-Ethylhexylacrylat, 48 Teilen 2-Hydroxypropylacrylat, 53 Teilen 2-Hydroxypropylmethacrylat und 17 Teilen Acrylsäure. Ansonsten wird verfahren wie in Beispiel 1.
Nach Entfernung des Methylethylketon erhält man eine Dispersion mit einem Festkörpergehalt von 41 % und einem pH-Wert von 7,90.

### Beispiel: 7

In einem 4 I Reaktionsgefäß mit Rührer, Rückflußkühler und 2 Zulaufgefäßen werden 532 Teile Polyester A zusammen mit 76 Teilen Methylethylketon eingewogen.
Die Monomerenmischung besteht aus 84 Teilen Butylmethacrylat, 84 Teilen t-Butylacrylat, 20 Teilen Mono-Styrol, 38 Teilen Stearylacrylat, 48 Teilen 2-Hydroxypropylacrylat, 53 Teilen 2-Hydroxypropylmethacrylat und 17 Teilen Acrylsäure. Ansonsten wird verfahren wie in Beispiel 1.
Nach Entfernung des Methylethylketon erhält man eine Dispersion mit einem Festkörpergehalt von 38 % und einem pH-Wert von 7,90.

### Beispiel 8

In einem 4 I Reaktionsgefäß mit Rührer, Thermometer, Rückflußkühler und 2 Zulaufgefäßen werden 532 Teile des Polyesterharzes A zusammen mit 76 Teilen Methylethylketon eingewogen.
In dem einen der beiden Zulaufgefäße wird eine Monomerenmischung, bestehend aus 103 Teilen Butylmethacrylat, 103 Teilen t-Butylacrylat, 20 Teilen Mono-Styrol, 48 Teilen 2-Hydroxypropylacrylat und 53 Teilen 2-Hydroxypropylmethacrylat eingewogen. In dem anderen Zulaufgefäß wird die Initiatorlösung bereitet, bestehend aus 3 Teilen 2,2'-Azo-bis-isobutyronitril (AIBN) und 69 Teilen Methylethylketon. Nachdem der Reaktionsgefäßinhalt auf 80°C aufgeheizt wurde, wird die Monomerenmischung innerhalb von 1 Stunde und 45 Minuten zugegeben. Direkt im Anschluß daran werden 25 Teile Acrylsäure in 15 Minuten zugegeben. Die Polymerisationsinitiatorlösung wird innerhalb von 2,5 Stunden simultan zugegeben. Die Polymerisationstemperatur wird bei 80°C gehalten.
Nach Beendigung der Zuläufe wird noch 1,5 Stunden bei 80°C gerührt. Danach werden 27 Teile Dimethylethanolamin (entspricht einem Neutralisationsgrad von 80 %) und 1000 Teile vollentsalztes Wasser zugegeben.
Bei max. 55°C wird das Methylethylketon unter vermindertem Druck abdestilliert.
Man erhält eine Dispersion mit einem Festkörpergehalt von 42 % und einem pH-Wert von 7,70.
Das Polymere hat eine Säurezahl von 27 und eine Hydroxylzahl von 111.

### Beispiel 9

In einem 4 I Reaktionsgefäß mit Rührer, Thermometer, Rückflußkühler und 2 Zulaufgefäßen werden 532 Teile des Polyesterharzes A zusammen mit 76 Teilen Methylethylketon eingewogen.
In dem einen der beiden Zulaufgefäße wird eine Monomerenmischung, bestehend aus 75 Teilen Butylmethacrylat, 75 Teilen t-Butylacrylat, 74 Teilen Mono-Styrol, 48 Teilen 2-Hydroxypropylacrylat und 53 Teilen 2-Hydroxypropylmethacrylat eingewogen. In dem anderen Zulaufgefäß wird die Initiatorlösung bereitet, bestehend aus 10 Teilen 2,2'-Azo-bis-isobutyronitril (AIBN) und 69 Teilen Methylethylketon. Nachdem der Reaktionsgefäßinhalt auf 80°C aufgeheizt wurde, wird die Monomerenmischung innerhalb von 2 Stunden und 40 Minuten zugegeben. Direkt im Anschluß daran werden 25 Teile Acrylsäure in 20 Minuten zugegeben. Die Polymerisationsinitiatorlösung wird innerhalb 3,5 Stunden simultan zugegeben. Die Polymerisationstemperatur wird bei 80°C gehalten. Nach Beendigung der Zuläufe wird noch 1,5 Stunden bei 80°C gerührt. Danach werden 33 Teile Dimethylethanolamin (entspricht einem Neutralisationsgrad von 100 %) und 1000 Teile vollentsalztes Wasser zugegeben.
Bei max. 55°C wird das Methylethylketon unter vermindertem Druck abdestilliert.
Man erhält eine Dispersion mit einem Festkörpergehalt von 42 % und einem pH-Wert von 8,50.
Das Polymere hat eine Säurezahl von 27 und eine Hydroxylzahl von 111.

### Vergleichsbeispiele:

### Polyester G (Vergleichsbeispiel zu EP-A-391 271 )

Es werden 92 Teile 1,6-Hexandiol, 293 Teile Neopentylglykol, 80 Teile Trimethylolpropan, 554 Teile Cyclohexan-1,2-dicarbonsäureanhydrid und 2 Teile Dibutylzinnoxid verwendet.
Die Herstellung des Polyesters wird wie bei Polyester A beschrieben durchgeführt.
Der Festkörpergehalt wird nach der Veresterung auf 80 % mit Methylethylketon eingestellt.
Man erhält einen Polyester mit einem berechneten mittleren Molekulargewicht von 1590 und einer Hydroxylzahl von 106 (bezogen auf Festharz).

### Polyester H (Vergleichsversuch zu EP-A-391 271)

Es werden 354 Teile 1,6-Hexandiol, 402 Teile Trimethylolpropan und 438 Teile Adipinsäure verwendet.
Die Herstellung des Polyesters wird wie bei Polyester A beschrieben durchgeführt.
Man erhält einen Polyester mit einem berechneten mittleren Molekulargewicht von 362 und einer Hydroxylzahl von 465.

### Polyester I (Vergleichsversuch zu DE-OS-4 010 176)

Es werden 366 Teile 1,6-Hexandiol, 323 Teile Neopentylglykol und 679 Teile Adipinsäure verwendet.
Die Herstellung des Polyesters wird wie bei Polyester A beschrieben durchgeführt.
Man erhält einen Polyester mit einem berechneten mittleren Molekulargwicht von 362 und einer Hydroxylzahl von 145.

### Beispiel 11

In einem 4 I Reaktionsgefäß mit Rührer, Rückflußkühler und 2 Zulaufgefäßen werden 499 Teile Polyester G zusammen mit 109 Teilen Methylethylketon eingewogen.
Es wird so verfahren wie in Beispiel 1. Zur Dispergierung in Wasser werden 23 Teile Dimethylethanolamin (entspricht einem Neutralisationsgrad von 100 %) und 1400 Teile vollentsalztes Wasser verwendet.
Nach Entfernung des Methylethylketon erhält man eine instabile Disperion, die nach kurzer Zeit sehr stark absetzt.

### Beispiel 12

In einem 4 I Reaktionsgefäß mit Rührer, Rückflußkühler und 2 Zulaufgefäßen werden 499 Teile Polyester G zusammen mit 109 Teilen Methylethylketon eingewogen.
Die Monomerenmischung besteht aus 95 Teilen Butylmethacrylat, 95 Teilen t-Butylacrylat, 20 Teilen Mono-Styrol, 48 Teilen 2-Hydroxypropylacrylat, 53 Teilen 2-Hydroxypropylmethacrylat und 34 Teilen Acrylsäure. Zur Dispergierung in Wasser werden 42 Teile Dimethylethanolamin (entspricht einem Neutralisationsgrad von 100 %) und 1400 Teile vollentsalztes Wasser verwendet. Ansonsten wird verfahren wie in Beispiel 1.
Nach Entfernung des Methylethylketon erhält man eine instabile Dispersion, die nach kurzer Zeit sehr stark absetzt.

### Beispiel 13 (Vergleichsversuch zu EP-A-391 271)

In einem 2 I Reaktionsgefäß mit Rührer, Rückflußkühler und einem Zulaufgefäß werden 359 Teile Polyester H zusammen mit 156 Teile Butylglykol vorgelegt und auf 140°C aufgeheizt.
Zu dieser Vorlage wird ein Gemisch aus 276 Teilen Butandiolmonoacrylat, 473 Teilen t-Butylacrylat, 37 Teilen Acrylsäure und 50 Teilen t-Butylperbenzoat in 4 Stunden zudosiert und 4 Stunden nachpolymerisiert.

### Beispiel 14 (Vergleichsversuch zu EP-A-365 775)

In einem 2 I Reaktionsgefäß mit Rührer, Thermometer, Rückflußkühler und 2 Zulaufgefäßen werden 200 Teile Butylglykol eingewogen und auf 140°C aufgeheizt.
In dem einen der beiden Zulaufgefäße wird eine Monomerenmischung, bestehend aus 200 Teilen Butylmethacrylat, 220 Teilen Butylacrylat, 150 Teilen Mono-Styrol, 150 Teilen Methylmethacrylat und 230 Teilen 2-Hydroxypropylacrylat eingewogen. In dem anderen Zulaufgefäß wird die Initiatorlösung bereitet, bestehend aus 45 Teilen t-Butylperbenzoat und 50 Teilen Butylglykol. Nachdem der Reaktionsgefäßinhalt auf 140°C aufgeheizt wurde, wird die Monomerenmischung innerhalb von 3 Stunden und 50 Minuten zugegeben. Direkt im Anschluß daran werden 50 Teile Acrylsäure in 20 Minuten zugegeben. Die Polymerisationsinitiatorlösung wird innerhalb von 3,5 Stunden simultan zugegeben. Die Polymerisationstemperatur wird bei 140°C gehalten. Nach Beendigung der Zuläufe wird noch 2,5 Stunden bei 140°C gerührt. Nach dem Abkühlen werden 49 Teile Dimethylethanolamin (entspricht einem Neutralisationsgrad von 80 %) und 383 Teile deionisiertes Wasser zugegeben.
Man erhält eine Dispersion mit einem Festkörpergehalt von 60 %.

### Beispiel 15 (Vergleichsversuch zu DE-OS-4 010 176)

In einem 6 I Reaktionsgefäß mit Rührer, Thermometer und Rückflußkühler werden 343 Teile Polyester I, 29 Teile Neopentylglykol, 18 Teile Trimethylolpropanmonoallylether, 258 Teile Methylethylketon, 259 Teile Isophorondiisocyanat und 0,4 Teile Dibutylzinndilaurat eingewogen und anschließend unter Stickstoffatmosphäre auf 80°C aufgeheizt. Bei einem NCO-Gehalt von 2 % werden 55 Teile Trimethylolpropan zugegeben. Die Reaktion wird bei 80°C weitergeführt, bis der NCO-Gehalt 0 % beträgt. Danach werden 253 Teile Methylethylketon zugegeben.
In dem einen der beiden Zulaufgefäße wird eine Monomerenmischung, bestehend aus 232 Teilen Methylmethacrylat, 232 Teilen Butylacrylat, 285 Teilen 2-Hydroxypropylmethacrylat und 36 Teilen Acrylsäure eingewogen. In dem anderen Zulaufgefäß wird die Initiatorlösung bereitet, bestehend aus 24 Teilen 2,2'-Azo-bis-isobutyronitril (AIBN) und 158 Teilen Methylethylketon. Bei 80°C wird die Monomerenmischung innerhalb von 3 Stunden zugegeben. Die Polymerisationsinitiatorlösung wird innerhalb von 3,5 Stunden simultan zugegeben. Die Polymerisationstemperatur wird bei 80°C gehalten. Nach Beendigung der Zuläufe wird noch 2,5 Stunden bei 80°C gerührt.
Danach werden 36 Teile Dimethylethanolamin (entspricht einem Neutralisationsgrad von 80 %) und 1750 Teile vollentsalztes Wasser zugegeben.
Das Methylethylketon wird unter vermindertem Druck abdestilliert. Man erhält eine Dispersion mit einem Festkörpergehalt von 41 % und einem pH-Wert von 7,40.
Das Polymere hat eine Säurezahl von 18 und eine Hydroxylzahl von 100.

### Anwendungsbeispiele 1 bis 9 (Verwendung der Herstellungsbeispiele 1 bis 9 ):

266 Teile (bezogen auf Festharz) Bindemitteldispersion der Beispiele 1 bis 9 werden jeweils unter einem Schnellrührer mit 127 Teilen einer 90 %igen Lösung eines handelsüblichen wasserverdünnbaren Melamin-Formaldehyd-Harzes (Cymel 327 ^{R} ) und 95 Teilen 1,2-Propandiol nacheinander gut gemischt. Danach wird jeweils der pH-Wert auf 8,60 - 8,70 mit Dimethylethanolamin eingestellt. Anschließend werden jeweils eine Mischung aus 0,09 Teilen eines handelsüblichen Verlaufsmittels (Fluorad FC 430 ^{R} ) und 0,81 Teilen Butylglykol sowie 4,6 Teile eines handelsüblichen Silikonharzhaltigen Additivs (Additol XW329 ^{R} ) nacheinander zugegeben und gemischt.
Mit vollentsalztem Wasser wird jeweils die Viskosität auf 27 sec. (gemessen im DIN 4mm Becher bei 20°C) eingestellt.

### Anwendungsbeispiel 11 (Verwendung des Vergleichsbeispieles 13 entsprechend EP-A-391 271):

250 Teile des Beispieles 13 werden unter einem Schnellrührer mit 148 Teilen einer 90 %igen Lösung eines handelsüblichen wasserverdünnbaren Melamin-Formaldehyd-Harzes (Cymel 327 ^{R}) und 36 Teilen Butylglykol nacheinander gut gemischt. Danach wird der pH-Wert auf 8,60 - 8,70 mit Dimethylethanolamin eingestellt.
Mit vollentsalztem Wasser wird die Viskosität eingestellt.

### Anwendungsbeispiel 12 (Verwendung des Vergleichsbeispieles 14 entsprechend EP-A-365 775):

400 Teile des Beispieles 14 werden unter einem Schnellrührer mit 66 Teilen einer 90 %igen Lösung eines handelsüblichen wasserverdünnbaren Melamin-Formaldehyd-Harzes (Cymel 327 ^{R} ) und eines handelsüblichen Verlaufsmittels (Fluorad FC 430 ^{R}) nacheinander gut gemischt. Danach wird der pH-Wert auf 8,60 - 8,70 mit Dimethylethanolamin eingestellt.
Anschließend wird mit vollentsalztem Wasser die Viskosität eingestellt.

### Anwendungbeispiel 13 (Verwendung des Vergleichsbeispieles 15):

500 Teile des Beispieles 15 werden unter einem Schnellrührer mit 99 Teilen einer 90 %igen Lösung eines handelsüblichen wasserverdünnbaren Melamin-Formaldehyd-Harzes (Cymel 327 ^{R} ) und 25 Teilen 1,2-Propandiol nacheinander gut gemischt. Danach wird der pH-Wert auf 8,60 - 8,70 mit Dimethylethanolamin eingestellt.
Anschließend werden eine Mischung aus 0,07 Teilen eines handelsüblichen Verlaufsmittels (Fluorad FC 430 ^{R} ) und 0,63 Teilen Butylglykol sowie 1,4 Teile eines handelsüblichen Silikonharzhaltigen Additivs (Additol XW329 ^{R} ) und 25 Teile Dowanol DPnB nacheinander zugegeben und gemischt.
Mit vollentsalztem Wasser wird die Viskosität auf 27 sec. (gemessen im DIN 4mm Becher bei 20°C) eingestellt.

Die erhaltenen Klarlacke wurden auf einen wasserverdünnbaren Metallic-Basislack, der vorher 10 Minuten bei 100°C angetrocknet wurde, in einer Schichtdicke von 35 - 40 µm aufgespritzt, 10 Minuten bei 80°C vorgetrocknet und bei 20 Minuten 150°C eingebrannt.
Die erhaltenen Überzüge wurden getestet (siehe Tabelle 1):

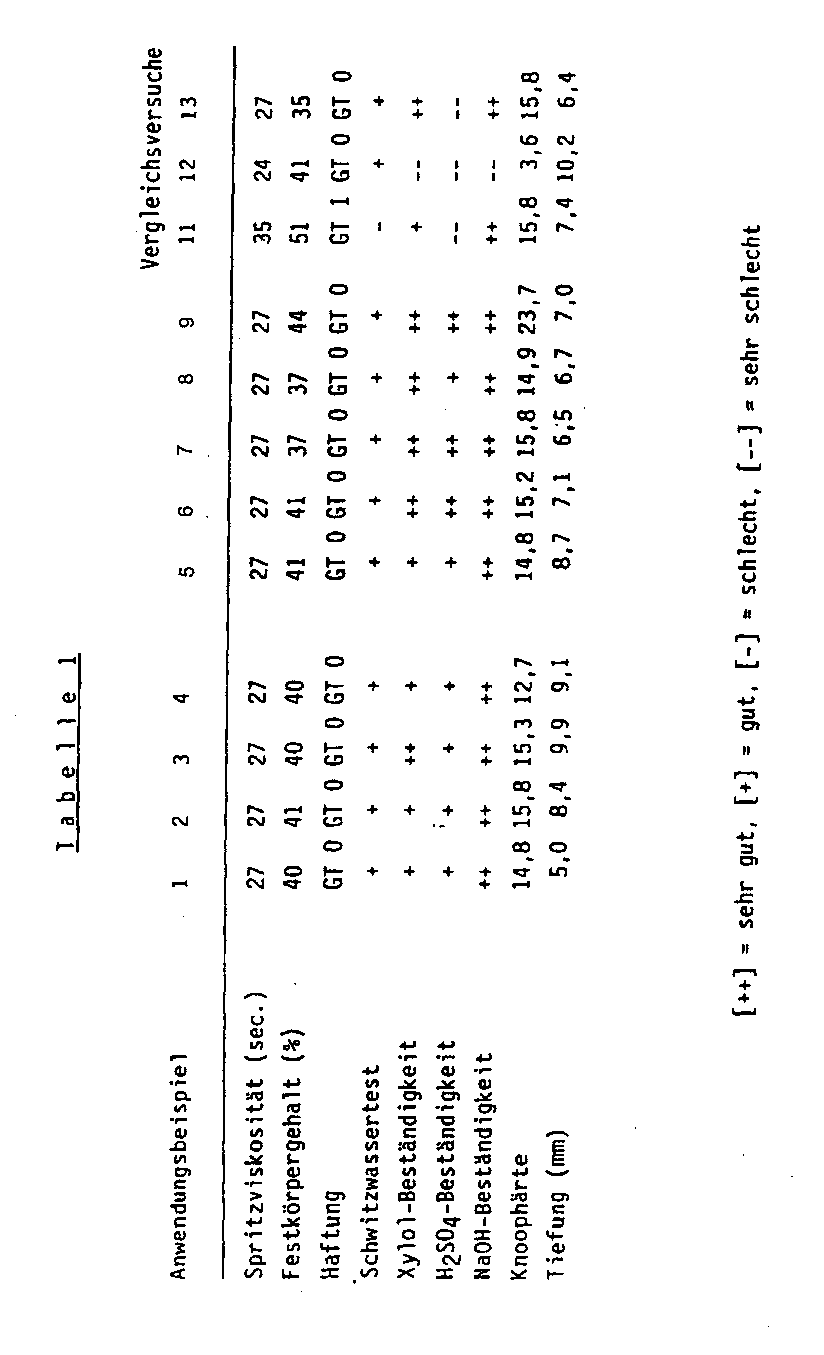

## Patentansprüche

1. Wäßriger Klarlack umfassend
- eine Polymerdispersion auf Polyester- und Acrylatbasis, die einen Festkörpergehalt zwischen 30 und 55 Gew.-% aufweist und erhältlich ist durch radikalische Polymerisation von 80 bis 20 Gew.-% mindestens
(a) eines (Meth-)Acrylsäureesters von Mono- oder Polyalkoholen, wobei die Ester auch noch freie Hydroxylgruppen enthalten können und
(b) einer ethylenisch ungesättigten, mindestens monofunktionellen Säure und gegebenenfalls
(c) eines ethylenisch ungesättigten, von (a) und (b) verschiedenen Monomeren oder Gemischen davon,
mit 20 bis 80 Gew.-% eines radikalisch polymerisierbaren Polyesterharzes mit 0,2 bis 1,5 polymerisierbaren Doppelbindungen pro Molekül und einem Molekulargewicht von 300 bis 5000, erhältlich durch Polykondensation von
• mindestens zweiwertigen Polyalkoholen ausgewählt aus der Gruppe von Ethylenglykol, 1,3- und 1,2-Propylenglykol, 1,4-Butandiol, 1,5-Pentandiol, 1,6-Hexandiol, 2,2-Dimethylpropandiol, Diethylenglykol, Triethylenglykol, Tetraethylenglykol, Hexaethylenglykol, 1,3-Dimethylolcyclohexan oder 1,4-Dimethylolcyclohexan, Glycerin, Trimethylolpropan oder Pentaerythrit;
• mit mindestens zweiwertigen Polycarbonsäuren oder ihren Derivaten, ausgewählt aus der Gruppe von Bernsteinsäure, Glutarsäure, Adipinsäure, Acelainsäure, Sebacinsäure, Phthalsäure, Isophthalsäure, Terephthalsäure, Teträhydrophthalsäure, Hexahydrophthalsäure, Endomethylentetrahydrophthalsäure, 1,2-, 1,3- oder 1,4-Cyclohexandicarbonsäure, Muconsäure und Kamphersäure, Trimellithsäure, Tricarballylsäure, Dimethylolpropionsäure oder deren mögliche Anhydride;
• in Gegenwart von mindestens eine polymerisierbare Doppelbindung enthaltende Polyalkoholen, ausgewählt aus der Gruppe von Glycerinmonoallylether, Trimethylolpropanmonoallylether, 1,4-Butendiol oder Dimethylolpropionsäuremonoallylether, oder einem ein Anlagerungsprodukt aus Allylglycidylether oder Glycidylmethacrylat an einen Carboxylgruppen enthaltenden Polyester;
wobei die Mengen (a), (b), (c) und des Polyesterharzes so eingesetzt werden, daß das erhaltene Polymer eine Hydroxylzahl (OH-Zahl) von 30 bis 200 und eine Säurezahl von 5 bis 100 aufweist und
- einen Vernetzer, der ausgewählt ist aus wasserlöslichen und/oder wasserdispergierbaren Aminoharzen oder wasseremulgierbaren Polyisocyanaten sowie
- übliche Lackzusatzstoffe,
wobei das Verhältnis von Dispersionsfeststoffanteil zu Vernetzer zwischen 60:40 und 85:15 beträgt.

2. Wäßriger Klarlack nach Anspruch 1, **dadurch gekennzeichnet, daß** als (Meth-)Acrylsäureester von Monoalkoholen die Ester von Methanol, Ethanol, Propanol, iso-Propanol, Butyl-, tert.-Butyl-, iso-Butyl-, Allyl-, Cyclohexyl-, Ethylhexyl-, Lauryl- oder Stearylalkohol und als Ester von Polyalkoholen die Mono- oder Diester von Ethandiol, 1,2- oder 1,3-Propandiol, 1,4-Butandiol oder 1,6-Hexandiol eingesetzt werden.

3. Wäßriger Klarlack nach Anspruch 1 oder 2, **dadurch gekennzeichnet, daß** als ethylenisch ungesättigte, mindestens monofunktionelle Säure Acrylsäure, Methacrylsäure, Vinylsulfonsäure, Crotonsäure, Maleinsäure, Fumarsäure, Itaconsäure oder die Halbester von Maleinsäure, Fumarsäure oder Itaconsäure eingesetzt werden.

4. Wäßriger Klarlack nach einem oder mehreren der Ansprüche 1. bis 3, **dadurch gekennzeichnet, daß** als ethylenisch ungesättigtes, von (a) und (b) verschiedenes Monomer Styrol, α-Methylstyrol, Vinyltoluol, Acrylamid, Methacrylamid, Acrylnitril oder Methacrylnitril eingesetzt wird.

5. Wäßriger Klarlack nach einem oder mehreren der Ansprüche 1 bis 4, **dadurch gekennzeichnet, daß** das Polyesterharz 0,5 bis 1,0 polymerisierbare Doppelbindungen enthält.

6. Wäßriger Klarlack nach einem oder mehreren der Ansprüche 1 bis 5, **dadurch gekennzeichnet, daß** sie eine Hydroxylzahl von 50 bis 150 und vorzugsweise von 80 bis 120 aufweist.

7. Wäßriger Klarlack nach einem oder mehreren der Ansprüche 1 bis 6, **dadurch gekennzeichnet, daß** sie eine Säurezahl von 15 bis 40 aufweist.

8. Wäßriger Klarlack nach einem oder mehreren der Ansprüche 1 bis 7, **dadurch gekennzeichnet, daß** als Aminoharz Melamin-Formaldehyd-Harze eingesetzt werden.

9. Wäßriger Klarlack nach einem oder mehreren der Ansprüche 1 bis 8, **dadurch gekennzeichnet, daß** es als Lösungsmittel 1,2-Propandiol enthält.

10. Verfahren zur Herstellung des wäßrigen Klarlacks, wie in den Ansprüchen 1 bis 9 beschrieben, **dadurch gekennzeichnet, daß** man in einem mit Wasser ganz oder teilweise mischbaren organischen Lösemittel 20 bis 80 Gew.-% eines radikalisch polymerisierbaren Polyesterharzes mit 0,2 bis 1,5 polymerisierbaren Doppelbindungen pro Molekül und einem Molekulargewicht von 300 bis 5000, erhältlich durch Polykondensation von
• mindestens zweiwertigen Polyalkoholen ausgewählt aus der Gruppe von Ethylenglykol, 1,3- und 1,2-Propylenglykol, 1,4-Butandiol, 1,5-Pentandiol, 1,6-Hexandiol, 2,2-Dimethylpropandiol, Diethylenglykol, Triethylenglykol, Tetraethylenglykol, Hexaethylenglykol, 1,3-Dimethylolcyclohexan oder 1,4-Dimethylolcyclohexan, Glycerin, Trimethylolpropan oder Pentaerythrit;
• mit mindestens zweiwertigen Polycarbonsäuren oder ihren Derivaten, ausgewählt aus der Gruppe von Bernsteinsäure, Glutarsäure, Adipinsäure, Acelainsäure, Sebacinsäure, Phthalsäure, Isophthalsäure, Terephthalsäure, Tetrahydrophthalsäure, Hexahydrophthalsäure, Endomethylentetrahydrophthalsäure, 1,2-, 1,3- oder 1,4-Cyclohexandicarbonsäure, Muconsäure und Kamphersäure, Trimellithsäure, Tricarballylsäure, Dimethylolpropionsäure oder deren mögliche Anhydride;
• in Gegenwart von mindestens eine polymerisierbare Doppelbindung enthaltende Polyalkoholen, ausgewählt aus der Gruppe von Glycerinmonoallylether, Trimethylolpropanmonoallylether, 1,4-Butendiol oder Dimethylolpropionsäuremonoallylether, oder einem ein Anlagerungsprodukt aus Allylglycidylether oder Glycidylmethacrylat an einen Carboxylgruppen enthaltenden Polyester;
vorlegt und diesem Polyesterharz 80 bis 20 Gew.-% mindestens
(a) eines (Meth-)Acrylsäureesters von Mono- oder Polyalkoholen, wobei die Ester auch noch freie Hydroxylgruppen enthalten können und
(b) einer ethylenisch ungesättigten, mindestens monofunktionellen Säure und gegebenenfalls
(c) eines ethylenisch ungesättigten, von (a) und (b) verschiedenen Monomeren oder Gemischen davon,
zugibt und in Gegenwart eines Radikalinitiators polymerisiert, das so erhaltene Produkt mit einer Base neutralisiert, in Wasser dispergiert, das organische Lösemittel, gegebenenfalls unter vermindertem Druck, abdestilliert und anschließend einen Vernetzer zumischt, der ausgewählt ist aus wasserlöslichen und/oder wasserdispergierbaren Aminoharzen oder wasseremulgierbaren Polyisocyanaten.

11. Verfahren nach Anspruch 10, **dadurch gekennzeichnet, daß** als organisches Lösemittel Ethanol, Propanol, Butanol, Aceton, Methylethylketon, Methylisobutylketon, Butylglykol, Ethylenglykol, Propylenglykol, N-Methylpyrrolidon, Ethylenglykoldimethylether, Methoxybutanol oder Diacetonalkohol eingesetzt werden.

12. Verfahren nach Anspruch 10 oder 11, **dadurch gekennzeichnet, daß** als Radikalinitiator Di-tert.-butylperoxid, Di-cumylperoxid, Di-benzoylperoxid, Di-lauroylperoxid, Cumolhydroperoxid, tert.-Butylhydroperoxid, tert.-Butylperbenzoat, tert.-Butylperpivalat, tert.-Butyl-per-3,5,5-trimethylhexanoat, tert.-Butyl-per-2-ethylhexanoat, Di-2-ethylhexyl-peroxydicarbonat, Dicyclohexyl-peroxydicarbonat, 1,1-bis-(tert.-butylperoxy)-3,5,5-trimethylcyclohexan, 1,1-bis-(tert.-butylperoxy)cyclohexan, Cyclohexanonperoxid, Methylisobutylketonperoxid, 2,2'-Azo-bis-(2,4-dimethylvaleronitril), 2,2'-Azo-bis-(2-methylbutyronitril), 1,1'-Azo-bis-cyclohexancarbonitril oder Azo-bis-isobutyronitril eingesetzt wird.

13. Verfahren nach einem oder mehreren der Ansprüche 10 bis 12, **dadurch gekennzeichnet, daß** als Base Ammoniak oder flüchtiger primäre, sekundäre und/oder organische Amine, insbesondere Ethylamin, Dimethylamin, Triethylamin, Morpholin, Piperidin, Diethanolamin, Triethanolamin, Dimethylethanolamin oder Gemische davon eingesetzt werden.

14. Verfahren nach einem oder mehreren der Ansprüche 10 bis 13, **dadurch gekennzeichnet, daß** die Polymerisation bei einer Temperatur zwischen 80 und 160 °C durchgeführt wird.

15. Verfahren nach einem oder mehreren der Ansprüche 10 bis 14, **dadurch gekennzeichnet, daß** die Neutralisation auf einen pH-Wert von 7 bis 10 erfolgt.

16. Verwendung des wäßrigen Klarlacks nach einem oder mehreren der Ansprüche 1 bis 9 als Decklack von Mehrschichtlackierungen.

## Claims

1. An aqueous clear varnish comprising
- a polymer dispersion based on polyester and acrylate having a solids content of between 30 and 55 % by weight which can be obtained by free-radical polymerisation of from 80 to 20 % by weight of at least
(a) one (meth)acrylic acid ester of mono- or polyalcohols, wherein said esters can additionally contain free hydroxyl groups, and
(b) one ethylenically unsaturated, at least monofunctional acid, and optionally
(c) one ethylenically unsaturated monomer which is distinct from (a) and (b) or mixtures thereof,
with from 20 to 80 % by weight of a free-radical polymerizable polyester resin having from 0,2 to 1,5 polymerizable double bonds per molecule and a molecular weight of from 300 to 5000, obtainable by the polycondensation of
• at least divalent polyalcohols selected from the group of ethyleneglycol, 1,3-and 1,2-propyleneglycol, 1,4-butanediol, 1,5-pentanediol, 1,6-hexanediol, 2,2-dimethylpropanediol, diethyleneglycol, triethyleneglycol, tetraethyleneglycol, hexaethyleneglycol, 1,3-dimethylolcyclohexane or 1,4-dimethylolcyclohexane, glycerol, trimethylolpropane or pentaerythritol;
• with at least divalent polycarboxylic acids or derivates thereof, selected from the group of succinic acid, glutaric acid, adipic acid, azelainic acid, sebacic acid, phthalic acid, isophthalic acid, terephthalic acid, tetrahydrophthalic acid, hexahydrophthalic acid, endomethylenetetrahydrophthalic acid, 1,2-, 1,3- or 1,4-cyclohexanedicarboxylic acid, muconic acid and camphoric acid, trimellitic acid, tricarballylic acid, dimethylolpropionic acid or their possible anhydrides;
• in the presence of polyalcohols containing at least one polymerizable double bond, selected from the group of glycerol monoallylether, trimethylolpropane monoallylether, 1,4-butenediol or dimethylolpropionic acid monoallylether, or an addition product of allylglycidylether or glycidylmethacrylate to a polyester containing carboxyl groups;
wherein the quantities of (a), (b) and (c) and of the polyester resin are selected such that the polymer obtained has a hydroxyl number (OH number) of from 30 to 200 and an acid number of from 5 to 100 and
- a cross linking agent selected from water soluble and/or water dispersable aminoresins or water-emulsifiable polyisocyanates and
- conventional paint additives
the ratio of dispersion solids content to cross linking agent being between 60 : 40 and 85 : 15.

2. The aqueous clear varnish according to claim 1, **characterized in that** the esters of methanol, ethanol, propanol, iso-propanol, butyl, tert.-butyl, iso-butyl, allyl, cyclohexyl, ethylhexyl, lauryl or stearyl alcohol are employed as said (meth)acrylic acid esters of monoalcohols, and the mono- or diesters of ethanediol, 1,2- or 1,3-propanediol, 1,4-butanediol or 1,6-hexanediol are employed as said esters of polyalcohols.

3. The aqueous clear varnish according to claims 1 or 2, **characterized in that** acrylic acid, methacrylic acid, vinylsulfonic acid, crotonic acid, maleic acid, fumaric acid, itaconic acid or the semi-esters of maleic acid, fumaric acid or itaconic acid are employed as said ethylenically unsaturated, at least monofunctional acid.

4. The aqueous clear varnish according to one or more of claims 1 to 3, **characterized in that**, styrene, α-methylstyrene, vinyltoluene, acrylamide, methacrylamide, acrylonitrile or methacrylonitrile is employed as said ethylenically unsaturated monomer which is distinct form (a) and (b).

5. The aqueous clear varnish according to one or more of claims 1 to 4, **characterized in that** said polyester resin contains from 0,5 to 1,0 polymerizable double bonds.

6. The aqueous clear varnish according to one or more of claims 1 to 5, **characterized by** a hydroxyl number of from 50 to 150 and preferably from 80 to 120.

7. The aqueous clear varnish according to one or more of claims 1 to 6, **characterized by** an acid number of from 15 to 40.

8. The aqueous clear varnish according to one or more of claims 1 to 7, **characterized in that** melamine-formaldehyde resins are employed as said aminoresin.

9. The aqueous clear varnish according to one or more of claims 1 to 8, **characterized by** containing 1,2-propanediol as a solvent.

10. A process for the preparation of the aqueous clear varnish as described in claims 1 to 9, **characterized by** providing from 20 to 80 % by weight of a free-radical polymerizable polyester resin having from 0,2 to 1,5 polymerizable double bonds per molecule and a molecular weight of from 300 to 5000, obtainable by the polycondensation of
• at least dihydric polyalcohols selected from the group of ethyleneglycol, 1,3-and 1,2-propyleneglycol, 1,4-butanediol, 1,5-pentanediol, 1,6-hexanediol, 2,2-dimethylpropanediol, diethyleneglycol, triethyleneglycol, tetraethyleneglycol, hexaethyleneglycol, 1,3-dimethylolcyclohexane or 1,4-dimethylolcyclohexane, glycerol, trimethylolpropane or pentaerythritol;
• with at least dibasic polycarboxylic acids or derivates thereof, selected from the group of succinic acid, glutaric acid, adipic acid, azelaic acid, sebacic acid, phthalic acid, isophthalic acid, terephthalic acid, tetrahydrophthalic acid, hexahydrophthalic acid, endomethylenetetrahydrophthalic acid, 1,2-, 1,3- or 1,4-cyclohexanedicarboxylic acid, muconic acid and camphoric acid, trimellitic acid, tricarballylic acid, dimethylolpropionic acid or the possible anhydrides thereof;
• in the presence of polyalcohols containing at least one polymerizable double bond, selected from the group of glycerol monoallylether, trimethylolpropane monoallylether, 1,4-butenediol or demethylolpropionic acid monoallylether or one addition product of allylglycidylether or glycidylmethacrylate to a polyester containing carboxyl groups
in a completely or partially water-miscible organic solvent adding from 80 to 20 % by weight of at least
(a) one (meth)acrylic acid ester of mono- or polyalcohols, wherein said esters can additionally contain free hydroxyl groups, and
(b) one ethylenically unsaturated, at least monofunctional acid, and optionally
(c) an ethylenically unsaturated monomer which is distinct from (a) and (b) or mixtures thereof
to said polyester resin, polymerising in the presence of a free-radical initiator, neutralizing the product thus obtained with a base, dispersing in water, distilling off the organic solvent, optionally under reduced pressure, and subsequently admixing a cross-linking agent selected from water soluble and/or water dispersable aminoresins or water emulsifiable polyisocyanates.

11. The process according to claim 10, **characterized in that**, ethanol, propanol, butanol, acetone, methylethylketone, methylisobutylketone, butylglycol, ethylenglycol, propyleneglycol, n-methylpyrrolidone, ethyleneglycol dimethylether, methoxybutanol, or diacetonealcohol is employed as said organic solvent.

12. The process according to claims 10 or 11, **characterized in that**, di-tert.-butyl peroxide, dicumyl peroxide, dibenzoyl peroxide, dilauroyl peroxide, cumene hydroperoxide, tert.-butyl hydroperoxide, tert.-butyl perbenzoate, tert.-butyl perpivalate, tert.-butyl per-3,5,5-trimethylhexanoate, tert.-butyl per-2-ethylhexanoate, di-2-ethylhexyl peroxydicarbonate, dicyclohexyl peroxydicarbonate, 1,1-bis(tert.-butylperoxy)-3,5,5-trimethylcyclohexane, 1,1-bis(tert.-butylperoxy)cyclohexane, cyclohexanone peroxide, methyl isobutyl ketone peroxide, 2,2'-azobis(2,4-dimethylvaleronitrile), 2,2'-azobis(2-methylbutyronitrile), 1,1'-azobis-(cyclohexanecarbonitrile or azobis(isobutyronitrile) is employed as said free-radical initiator.

13. The process according to one or more of claims 10 to 12, **characterized in that**, ammonia or volatile primary, secondary and/or organic amines, especially ethylamine, dimethylamine, triethylamine, morpholine, piperidine, diethanolamine, triethanolamine, dimethylethanolamine, or mixtures thereof are employed as said base.

14. The process according to one or more of claims 10 to 13, **characterized in that** said polymerization is performed at a temperature of between 80 °C and 160 °C.

15. The process according to any one or more of claims 10 to 14, **characterized in that** said neutralization is done to a pH value of from 7 to 10.

16. Use of the aqueous clear varnish according to one or more of claims 1 to 9 as a top coat for multi-coat paints.

## Revendications

1. Laque aqueuse transparente comprenant :
- une dispersion de polymères, à base de polyester et d'acrylate, qui présente une teneur en matière sèche (un extrait sec) compris (e) entre 30 et 55% en poids et que l'on peut obtenir par polymérisation radicalaire de 80 à 20% en poids d'au moins
(a) un ester de l'acide (Meth) acrylique de monoalcools ou de polyalcools, les esters pouvant aussi contenir encore des groupes hydroxyles libres, et
(b) un acide à insaturation éthylénique au moins monofonctionnel. et éventuellement
(c) un monomère à insaturation éthylénique, différent de (a) et (b) ou des mélanges de tels monomères,
avec 20 à 80 % en poids d'une résine de polyester polymérisable par voie radicalaire, comportant par molécule 0,2 à 1,5 double liaison polymérisable et ayant un poids moléculaire de 300 à 5000, que l'on peut obtenir par polycondensation de
• au moins divalent polyalcools choisi parmi de la groupe de l'éthylène glycol, le 1,3-et le 1,2-propylène glycol, 1,4-butanediol, le 1,5-pentanediol, le 1,6-hexanediol, le 2,2-diméthylpropanediol, le diéthylèneglycol, le triéthylene glycol, le tétraéthylène glycol l'hexaéthylène glycol, le 1,3-diméthylolcyclohexane ou le 1,4-diméthylolcyclohexane, le glycérol, le triméthylolpropane ou le pentaérythritol.
• avec des acides polycarboxyliques au moins divalents ou avec leurs dérivés choisi parmi de la groupe de l'acide succinique, l'acide glutarique, l'acide adipique, l'acide azélaïque, l'aide sébacique, l'acide phtalique, l'acide isophtalique, l'acide téréphtalique, l'acide tétrahydrophtalique, l'acide hexahydrophtalique, l'acide endo-méthylène tétrahydrophtalique, l'acide 1,2-1,3- ou 1,4-cyclohexane dicarboxylique, l'acide muconique et l'acide camphorique, l'acide trimellitique, l'acide tricarballylique, l'acide diméthylolpropionique ou leurs anhydrides possibles
• en présence de polyalcools contenant au moins une double liaison polymérisable choisi parmi de la groupe de l'éther monoallylique du glycérol, l'éther monoallylique du triméthylolpropane, l'éther monoallylique du 1,4-butènediol ou l'éther monoallylique de l'acide diméthylolproprionique ou un produit d'addition de l'éther allylique de glycidyle ou du méthacrylate de glycidyle sur un polyester contenant des groupes carboxyle
les constituants (a), (b), (c) et la résine de polyester étant utilisés en quantités telles que le polymère obtenu présente un indice d'hydroxyle (indice de OH) de 30 à 200 et un indice d'acide de 5 à 100, et
- un agent de réticulation, choisi parmi des résines aminées hydrosolubles et/ou dispersables dans l'eau ou parmi des polyisocyanates émulsifiables en présence d'eau, ainsi que
- des additifs usuels pour laques et vernis,
le rapport entre la proportion de la matière sèche de la dispersion, d'une part, et l'agent de réticulation, d'autre part, se situant entre 62:40 et 85:15.

2. Laque aqueuse transparente selon la revendication 1, **caractérisée en ce que** l'on a utilisé comme esters de l'acide (Meth) acrylique et de monoalcools les esters du méthanol, de l'éthanol, du propanol, de l'isopropanol, de l'alcool butylique, de l'alcool tertio butylique, de l'alcool isobutylique, de l'alcool allylique, de l'alcool cyclohexylique, de l'alcool éthylhexylique, de l'alcool laurylique ou de l'alcool stéarylique, et, comme ester de polyalcools, les monoesters ou diesters de l'éthanediol, du 1,2- ou du 1,3 propanediol, du 1,4-butanediol ou du 1,6-hexanediol.

3. Laque aqueuse transparente selon la revendication 1 ou 2, **caractérisée en ce que** l'on a utilisé comme acide à insaturation éthylénique, au moins monofonctionnel, l'acide acrylique, l'acide méthacrylique, l'acide vinylsulfonique, l'acide crotonique, l'acide maléïque, l'acide fumarique, l'acide itaconique ou les hemiesters de l'acide maléïque, de l'acide fumarique ou de l'acide itaconique.

4. Laque aqueuse transparente selon une ou plusieurs des revendications 1 à 3, **caractérisée en ce que** l'on a utilisé comme monomère à insaturation éthylénique différent de (a) et de (b), le styrène, l'α-methylstyrène, le vinyltoluène, l'acrylamide, le méthacrylamide, l'acrylonitrile ou le méthacrylonitrile.

5. Laque aqueuse transparente selon une ou plusieurs revendication 1 à 4, **caractérisée en ce que** la résine de polyester contient 0,5 à 1,0 double liaison polymérisable.

6. Laque aqueuse transparente selon une ou plusieurs des revendications 1 à 5, **caractérisée en ce qu'**elle présente un indice d'hydroxyle de 50 à 150 et avantageusement un indice de 80 à 120.

7. Laque aqueuse transparente selon une ou plusieurs des revendications 1 à 6, **caractérisée en ce qu'**elle présente un indice d'acide de 15 à 40.

8. Laque aqueuse transparente selon une ou plusieurs des revendications 1 à 7, **caractérisée en ce que** l'on a utilisé comme résine aminée des résines de mélamine-formaldéhyde.

9. Laque aqueuse transparente selon une ou plusieurs des revendications 1 à 8, **caractérisée en ce qu'**elle contient comme solvant le 1,2-propanediol.

10. Procédé de production de la laque aqueuse transparente telle que décrite dans les revendications 1 à 9, **caractérisé en ce qu'**on place tout d'abord dans un solvant organique entiérement ou partiellement miscible à l'eau, 20 à 80% en poids d'une résine de polyester polymérisable par voie radicalaire, comportant par molécule 0,2 à 1,5 doubles liaisons polymérisables par molécule et ayant un poids moléculaire de 300 à 5000, que l'on peut obtenir par polycondensation de
• au moins divalent polyalcools choisi parmi de la groupe de l'éthylène glycol, le 1,3-et le 1,2-propylène glycol, 1,4-butanediol, le 1,5-pentanediol, le 1,6-hexanediol, le 2,2-diméthylpropanediol, le diéthylèneglycol, le triéthylene glycol, le tétraéthylène glycol l'hexaéthylène glycol, le 1,3-diméthylolcyclohexane ou le 1,4-diméthylolcyclohexane, le glycérol, le triméthylolpropane ou le pentaérythritol.
• avec des acides polycarboxyliques au moins divalents ou avec leurs dérivés choisi parmi de la groupe de l'acide succinique, l'acide glutarique, l'acide adipique, l'acide azélaïque, l'aide sébacique, l'acide phtalique, l'acide isophtalique, l'acide téréphtalique, l'acide tétrahydrophtalique, l'acide hexahydrophtalique, l'acide endométhylène tétrahydrophtalique, l'acide 1,2- 1,3- ou 1,4-cyclohexane dicarboxylique, l'acide muconique ou l'acide camphorique, l'acide trimellitique, l'acide tricarballylique, l'acide diméthylolpropionique ou leurs anhydrides possibles
• en présence de polyalcools contenant au moins une double liaison polymérisable choisi parmi de la groupe de , l'éther monoallylique du glycérol, l'éther monoallylique du triméthylolpropane, l'éther monoallylique du 1,4-butènediol ou l'éther monoallylique de l'acide diméthylolproprionique ou un produit d'addition de l'éther allylique de glycidyle ou du méthacrylate de glycidyle sur un polyester contenant des groupes carboxyles
et l'on ajoute a cette résine de polyester 80 à 20 % en poids d'au moins
(a) un ester d'acide (meth) acrylique de monoalcools ou de polyalcools, les esters pouvant aussi contenir encore des groupes hydroxyles libres, et
(b) un acide à insaturation éthylénique, au moins monofontionnel et éventuellement,
(c) un monomère à insaturation éthylénique, différent de (a) et de (b), ou des mélanges de tels monomères,
et l'on provoque la polymérisation en présence d'un amorceur générateur de radicaux libres, an neutralise avec une base le produit ainsi obtenu, an le disperse dans de l'eau, on chasse par distillation, éventuellement sous pression réduite, le solvant organique puis an incorpore par mélange un agent de réticulation choisi parmi les résines aminées hydrosolubles et/ou dispersables dans l'eau, ou parmi des polyisocyanates émulsifiables dans de l'eau.

11. Procédé selon la revendication 10, **caractérisé en ce qu'**on a utilisé comme solvant organique l'éthanol, le propanol, le butanol, l'acétone, la méthyléthyléthylcétone, la méthylisobutylcétone, le butylglycol, l'éthyléneglycol, le propyléneglycol, la N-méthylpyrrolidone, l'éther diméthylique de l'éthyléneglycol, le méthoxybutanol ou le diacétonealcool.

12. Procédé selon la revendication 10 ou 11, **caractérisé en ce qu'**on utilise, comme amorceur radicalacre, du peroxyde de ditertiobutyle, du peroxyde de dicumyle, du peroxyde de dibenzoyle, du peroxyde de dilauroyle, de l'hydroperoxyde de cumène, de l'hydroperoxyde de tert.-butyle, du perbenzoate de tert.-butyle, du perpivalate de tert.butyle, du per-3,5,5-triméthylhexanoate de tert.-butyle, du per-2-éthylhexanoate de tert.-butyle, du peroxydicarbonate de di-2-éthylhexyle, du peroxydicarbonate de dicyclohexyle, du 1,1,-bis-(tert.-butylperoxy)-3,5,5-trimethylcyclohexane, du 1,1-bis-(tert.-butylperoxy)cyclohexane, du peroxyde de la cyclohexanone, du peroxyde de la méthylisobutylcétone, du 2,2'-azo-bis-(2,4-diméthylvaléronitrile), du 2,2'-azo-bis-(2-méthylbutyronitrile), du 1,1'-Azobis-cyclohexanecarbonitrile ou de l'azo-bis-isobutyronitrile.

13. Procédé selon une ou plusieurs des revendications 10 à 12, **caractérisé en ce qu'**on utilise comme base l'ammoniaque ou des amines volatiles primaires, secondaires et/ou organiques, notamment l'éthylamine, la diméthylamine, la triéthylamine, la morpholine, la pipéridine, la diéthanolamine, la triéthanolamine, la diméthyléthanolamine ou des mélanges de ces amines.

14. Procédé selon une ou plusieurs des revendications 10 à 13, **caractérisé en ce qu'**on conduit la polymérisation à une température comprise entre 80 et 160 °C.

15. Procédé selon une ou plusieurs des revendications 10 à 14, **caractérisé en ce que** la neutralisation a lieu à une valeur de pH de 7 à 10.

16. Utilisation de la laque aqueuse transparente selon une ou plusieurs des revendications 1 à 9 comme laque de couverture de laquages à couches multiples.
